# EUROPÄISCHE PATENTSCHRIFT

(11) **EP 2 272 788 B1**
(45) Veröffentlichungstag und Bekanntmachung des Hinweises auf die Patenterteilung: **14.03.2012**
(21) Anmeldenummer: 10007004.4
(22) Anmeldetag: 07.07.2010
(51) Int. Cl.: B66F 9/20, B60N 2/46, G05G 1/62

(54) **Bedienvorrichtung für Flurförderzeug**
Control device for industrial truck
Dispositif de commande pour un chariot de manutention

(30) Priorität: 09.07.2009 DE 102009032492
(43) Veröffentlichungstag der Anmeldung: 12.01.2011
(73) Patentinhaber: Linde Material Handling GmbH, 63743 Aschaffenburg (DE)
(72) Erfinder: Hanke, Mark, 63739 Aschaffenburg (DE); Messerschmidt, Martin, 63843 Niedernberg (DE); Kretschmer, Steffen, 86530 Cenon sur Vienne (FR); Ingelfinger, Dietmar, 74235 Erlenbach (DE)
(74) Vertreter: Geirhos, Johann

(56) Entgegenhaltungen:
- EP-A1- 1 205 429
- EP-A1- 1 693 334
- EP-A2- 1 288 063
- EP-A2- 1 978 535
- DE-A1- 4 408 777
- DE-A1-102007 023 774
- JP-A- 10 091 263

## Beschreibung

Die vorliegende Erfindung betrifft eine Bedienvorrichtung für ein Flurförderzeug mit mindestens einem an einer Armlehne als Bedienkonsole angeordneten Bedienelement.

Es ist bekannt, dass Flurförderzeuge an ihren Bedienplätzen Bedienkonsolen aufweisen, an denen eines oder mehrere Bedienelemente angeordnet sind und auf die ein Fahrer in stehender oder sitzender Haltung zur Steuerung von Funktionen des Flurförderzeugs mit einer oder beiden Händen zugreifen kann.

Beispielsweise haben Regalbediengeräte an der Brüstung des Fahrerstands eine Bedienkonsole, vor der der Fahrer steht. Schubmaststapler, insbesondere Schmalgangstapler, weisen eine seitliche Armauflage als Bedienkonsole auf.

Bei Bedienvorrichtung für Flurförderzeuge ist die Bedienkonsole auch oftmals so gestaltet, dass eine Mehrzahl von Bedienelementen in eine Armlehne eines Fahrersitzes integriert wird und ein Fahrer, der auf dem Fahrersitz sitzt, mit dem Arm die Bedienelemente gut reichen kann und mit diesem Arm die Funktionen des Flurförderzeugs steuern kann. Zum Beispiel wird eine Bedienkonsole oftmals bei Gegengewichtgabelstaplern an einem Fahrersitz angeordnet. Dabei dienen die Bedienelemente im allgemeinen zur Bedienung der Lasthandhabungsfunktionen, wie insbesondere Anheben und Absenken eines Lastaufnahmemittels wie einer Lastgabel, die an einem Hubmast anhebbar und absenkbar geführt ist, sowie weiter zum Neigen eines solchen Hubmastes, zum seitlichen Verschieben des Lastaufnahmemittels und ggf. zum Ansteuern weiterer hydraulischer Zusatzfunktionen. Es ist auch denkbar, solche Bedienelemente als Fahrtrichtungsschalter des Flurförderzeugs vorzusehen, durch den zwischen Vorwärts- und Rückwärtsfahrt gewählt werden kann, oder sogar direkt die Fahrfunktionen, wie Geschwindigkeit, Beschleunigung und Abbremsen über diese zu steuern.

Bekannt ist dabei die Anordnung der Bedienelemente in einer Reihe, die ggf. eine Krümmung aufweisen kann. Dabei werden die Bedienelemente von oben in die Konsole der Armlehne eingesetzt und verschraubt. Anschließend wird insbesondere bei Bedienelementen, die aus Bedienhebeln bestehen, als Schutz vor eindringender Feuchtigkeit und Schmutz von oben ein Faltenbalg aus elastischem Material, insbesondere Gummi, aufgesetzt. Dabei werden die Schraubenköpfe der Schrauben, mit denen das Bedienelement von oben auf der Konsole festgeschraubt wurde, durch diesen Faltenbalg abgedeckt, der über einen entsprechenden Flansch oder eine Ausformung einer Grundplatte des Bedienelements gezogen wird und von dieser gehalten wird.

Nachteilig an diesem Stand der Technik ist, dass bei der Verschraubung der Grundplatte des Bedienelements in die Konsole die Schraubenköpfe frei zugänglich sein müssen und daher das Überziehen des Faltenbalgs über den Flansch der Grundplatte oder die Grundplatte stets erst in montiertem Zustand erfolgen kann. Dies ist umständlich und erfordert relativ lange Montagezeiten. Die Zugänglichkeit, um den Faltenbalg über den entsprechenden Flansch oder die Grundplatte zu ziehen, ist eingeschränkt. Gleichzeitig muss das Material des Faltenbalges eine relativ große Vorspannung aufweisen, um einen sicheren Halt des Faltenbalges in montiertem Zustand zu gewährleisten. Dadurch wird jedoch andererseits in der Montagesituation des bereits montierten Bedienelements das Überziehen aufgrund der engen Platzverhältnisse gerade erschwert.

Weiter ist bekannt, die einzelnen Funktionen der Bedienelemente mittels Aufklebern zu kennzeichnen, die auf den zuvor genannten Faltenbalg geklebt werden.

Nachteilig an diesem Stand der Technik ist jedoch, dass auf dem elastischen Material des Faltenbalgs die Dauerhaftfähigkeit solcher Aufkleber nur schwer oder gar nicht gewährleistet werden kann und es oftmals zu einem Verlust der Klebekraft mit einem Abfallen des Aufklebers kommt.

Bei den Anordnungen von Bedienelementen entsprechend dem Stand der Technik ist auch bekannt, dass die Armlehne insbesondere im Bereich ihres vorderen Endes, der auch als Armlehnenkopf bezeichnet wird, vorgegebene Montagepositionen aufweist, in die dann die Bedienelemente montiert werden können. Dabei können an dieselbe Position unterschiedliche Bedienelemente wie ein Hebel in Form eines Joysticks, der in ein oder zwei Ebenen verschwenkbar ist, oder Schalterfelder, oder Bedienelemente, die Drehgeber sind, angeordnet werden.

Nachteilig an diesem Stand der Technik ist jedoch, dass bei Änderungen und Anpassungen der Bedienelemente an ein spezifisches Flurförderfahrzeug nur eine geringe Flexibilität möglich ist und relativ umfangreich eine Überarbeitung der gesamten Armlehne und des Armlehnenkopfes erforderlich werde kann.

Aus der DE 10 2007 023 774 ist ein Flurförderzeug mit Lasthebemitteln und einer Vorrichtung zur Vorwahl einer Hubhöhe des Lasthebemittels aus einer Mehrzahl von angesteuerten Hubhöhen bekannt. Dabei weist das Flurförderzeug in Form eines Gabelstaplers einen Fahrerarbeitsplatz mit einer Armlehne auf, an deren vorderen Ende bzw. Armlehnenkopf zwei Bedienhebel angeordnet sind, mit denen Funktionen des Flurförderzeugs bedient werden können.

Die beiden Bedienhebel sind dabei in einer Reihe quer zur Längserstreckung der Armlehne angeordnet.

Der aus der DE 10 2007 023 774 A1 bekannte Stand der Technik weist dabei die bereits zuvor geschilderten Nachteile auf.

Es ist daher Aufgabe der vorliegenden Erfindung, eine Bedienvorrichtung mit zumindest einem Bedienelement zur Verfügung zu stellen, das auf einer Armlehne angeordnet ist, bei dem die Montage erleichtert wird und zugleich eine leichte Anpassbarkeit an geänderte Funktionen eines Flurförderzeugs möglich ist.

Diese Aufgabe wird durch eine Bedienvorrichtung mit den Merkmalen des unabhängigen Anspruchs 1 sowie ein System aus einer Mehrzahl von Bedienvorrichtungen mit den Merkmalen des Anspruchs 20 gelöst. Vorteilhafte Weiterbildungen werden in den Unteransprüchen angegeben.

Die Aufgabe wird durch eine Bedienvorrichtung für ein Flurförderzeug mit mindestens einem an einer Armlehne als Bedienkonsole angeordneten Bedienelement gelöst, bei der das Bedienelement in einer Öffnung eines Abdeckelements befestigt ist und in diesem Abdeckelement montiert als Vormontagebaugruppe in eine Aufnahmeöffnung der Bedienkonsole einsetzbar ist.

Vorteilhaft kann dadurch eine Vormontage des Bedienelements an dem Abdeckelement erfolgen und dieses als Vormontagebaugruppe in die Bedienkonsole eingesetzt werden. Zugleich kann eine große Flexibilität erreicht werden für den Fall, dass Änderungen der Ausführung der Bedienvorrichtung erforderlich werden, wenn entweder die relative Position des Bedienelements oder die Art und Auswahl des Bedienelements oder gegebenenfalls mehrerer Bedienelemente geändert werden sollen, um den Erfordernissen von Änderungen des zugehörigen Flurförderzeugs bzw. eines neuen Flurförderzeuges Rechnung zu tragen, ohne dass eine vollständige Überarbeitung der Bedienkonsole notwendig wird. Hierzu ist vorteilhaft nur erforderlich, das entsprechende Abdeckelement und das oder die zugehörigen Bedienelemente zu überarbeiten, solange die Form des Abdeckelements an den entsprechenden Passstellen gegenüber der Aufnahmeöffnung in der Bedienkonsole nicht geändert wird. Im Fall von mehreren Bedienelementen, die an einem gemeinsamen Abdeckelement angeordnet sind, werden vorteilhaft durch das Abdeckelement auch die Position der Bedienelemente zueinander und der Abstand der Bedienelemente untereinander definiert. Die Position und der Abstand können auf einfache Weise durch alleinige Änderung des Abdeckelements angepasst werden.

In vorteilhafter Ausführungsform ist das Bedienelement an dem Abdeckelement in die Öffnungen von der Unterseite her einsetzbar.

Insbesondere Bedienelemente, die einen Faltenbalg aufweisen, der üblicherweise nach oben hin sich kegelförmig oder pyramidenförmig verjüngt, lassen sich auf diese Weise leicht einsetzen. Ganz allgemein ermöglicht dies zum einen eine unter Gesichtspunkten des Designs und der Gestaltung optimierten Formgebung auf der Oberseite und zugleich die Anordnung von Befestigungselementen für die einzelnen Bedienelemente auf der Unterseite des Abdeckelements.

In günstiger Ausführungsform weist das Bedienelement einen Faltenbalg auf, dessen unteres Ende zwischen dem Bedienelement und dem Abdeckelement gehalten wird. Dadurch kann bei Bedienelementen mit einem Faltenbalg eine sichere Arretierung des Faltenbalges am unteren Ende erreicht werden, indem ein Bereich des Faltenbalges zwischen dem Abdeckelement und zum Beispiel einer Grundplatte des Bedienelementes eingeklemmt wird. Insbesondere kann jedoch dadurch vermieden werden, dass ein Faltenbalg über einen Flansch einer Grundplatte oder die Grundplatte selbst in bereits montiertem Zustand übergezogen werden muss, was aufgrund der Geometrie und beengten Platzverhältnisse zeitaufwendig ist. Vielmehr kann der Faltenbalg zunächst bereits in die vollständige Endlage an dem Bedienelement montiert werden und sodann das Bedienelement in das Abdeckelement von der Unterseite her eingeführt werden, wobei nur darauf zu achten ist, dass weiter oben liegende Faltungen des Faltenbalges durch die Öffnung vollständig hindurchgeführt werden. Nachfolgend kann dann das Bedienelement in entsprechende Befestigungselemente an der Unterseite des Abdeckelements eingesetzt werden. Dabei wird automatisch ein hierfür vorgesehener Bereich des Faltenbalgs, beispielsweise eine unterste nach außen angeformte flanschförmig umlaufende Fläche oder eine angeformte stufenförmige Abdeckkappe für eine Grundplatte des Bedienelements, zwischen der Grundplatte und dem Abdeckelement eingeklemmt und der Faltenbalg somit sicher festgehalten.

Vorteilhaft wird das Bedienelement durch mindestens eine Rastverbindung mit dem Abdeckelement verbunden.

Durch eine Rastverbindung lässt sich eine einfach und schnell zu schließende Verbindung erreichen, durch die eine rasche Montage erreicht werden kann. Zugleich ist mit dem Einrasten der Rastverbindung auch sicher gestellt, dass die Verbindung in einem festen und definierten Haltezustand ist.

In günstiger Ausführungsform ist die Rastverbindung von einer Rastnase und einem Haltebügel gebildet. Dabei kann die Rastnase an dem Bedienelement angeordnet sein.

Alternativ ist auch eine umgekehrte Anordnung möglich, bei der die Rastnase an dem Abdeckelement angeordnet ist und der Haltebügel an dem Bedienelement.

Vorteilhaft kann die Rastnase sehr leicht durch Anformen an Bauteile insbesondere bei einem Herstellungsverfahren mittels Spritzguss hergestellt werden. Besonders einfach ist dabei die Anformung einer solchen Rastnase im Bereich eines Gehäuses, in dem die entsprechende Sensorik oder Messelektronik des Bedienelementes aufgenommen ist, oder einer Grundplatte des Bedienelements.

In günstiger Ausführungsform kann das Abdeckelement im Bereich der Öffnung einen Haltebügel für die Rastnase aufweisen.

Das Bedienelement kann durch mindestens zwei an der Öffnung einander gegenüber liegende Rastverbindungen mit dem Abdeckelement verbunden sein.

Insbesondere können die zwei Rastverbindungen im Falle von mehreren Bedienelementen in Bezug zu einer Längserstreckung des Abdeckelements jeweils seitlich an den Öffnungen angeordnet werden.

In günstiger Ausführungsform ist die Aufnahmeöffnung mit einer Seitenwand versehen, die bei in die Aufnahmeöffnung eingesetzter Vormontagebaugruppe mit der Rastverbindung in Wirkverbindung steht.

Insbesondere können die Rastverbindungen so angeordnet sein, dass bei in die Aufnahmeöffnung eingesetzter Vormontagebaugruppe Haltebügel der Rastverbindung durch die Seitenwand so in ihrem Bewegungsraum eingeschränkt sind, dass diese nicht von den Rastnasen vollständig herabgezogen werden können, oder dass die Haltebügel an der Seitenwand anliegen und in dieser Stellung gesichert sind.

Dadurch wird verhindert, dass sich die Rastverbindungen nach Einsetzen der Vormontagebaugruppe wieder lösen können.

Vorteilhaft weist das Abdeckelement Flächenbereiche für Beschriftungsaufkleber auf.

Dadurch können die Beschriftungsaufkleber für die einzelnen Funktionen, die den jeweiligen Bedienelementen zugeordnet werden, auf einem harten Material aufgeklebt werden. Insbesondere wenn bei der Auswahl des Materials für das Abdeckelement entsprechende Werkstoffe, insbesondere Kunststoff gewählt werden, die für einen dauerhaften Halt eines solchen Beschriftungsaufklebers besonders geeignet sind, kann eine entsprechend zuverlässige Verbindung mit dem Beschriftungsaufkleber sichergestellt werden.

Das Abdeckelement kann zwischen den Öffnungen an der Unterseite Rippen aufweisen.

Durch diese Rippen, die in Richtung der Längserstreckung der Armlehne orientiert sein können, wird das Abdeckelement versteift. Zum anderen können mit den Rippen auch Befestigungselemente für die Bedienelemente verbunden werden und kann erreicht werden, dass die Bedienelemente leichter und sicherer sich beim Einführen von unten in die Öffnungen ausrichten lassen.

Vorteilhaft ist zumindest eines der Bedienelemente der Bedienvorrichtung ein Bedienhebel, insbesondere ein Joystick, der um eine oder zwei Achsen verschwenkbar ist.

Insbesondere sind dabei auch Ausführungen solcher Bedienelemente als Minihebel möglich. Minihebel sind in der Regel um eine Achse verschwenkbar.

In vorteilhafter Ausführungsform ist zumindest eines der Bedienelemente ein Drehgeber oder Drehrücksteller.

Ein solcher Drehgeber kann insbesondere als Lenkknopf zur Fahrzeuglenkung dienen.

Als Bedienelement können auch ein Display oder andere Anzeigevorrichtungen vorgesehen werden.

Es ist auch möglich als Bedienelemente Schalter, Druckschalter, Wippschalter, Tastschalter oder einen Notausknopf vorzusehen.

In günstiger Ausführungsform ist das Abdeckelement über die Bedienelemente an der Bedienkonsole befestigt. Insbesondere können Schraubverbindungen zwischen den Bedienelementen und der Bedienkonsole vorgesehen sein.

In günstiger Ausführungsform können die Bedienelemente Gewindeeinsätze aufweisen und die Bedienkonsole kann entsprechende, zu den Schraubenpositionen passende, Langlöcher aufweisen.

Dadurch kann vorteilhaft erreicht werden, dass das gesamte Abdeckelement indirekt über die Bedienelemente an der Bedienkonsole befestigt wird, an denen sich aufgrund der Bauhöhe der Gehäuse besonders gut entsprechende Gewindeeinsätze ausformen lassen bzw. im Spritzgussverfahren einspritzen lassen. Dadurch kann auch eine direkte Ableitung von Abstützkräften des Bedienelements in die Bedienkonsole und eine steife Verbindung der Bedienelemente mit der Bedienkonsole der Armlehne erreicht werden.

Wenn sich die Positionen von Bedienelementen bei Änderungen oder Anpassungen durch unterschiedliche Abdeckelemente in der Erstreckungsrichtung des Abdeckelementes verändern, so kann durch entsprechende Langlöcher auf Seite der Bedienkonsole erreicht werden, dass für diesen Fall keine entsprechende Anpassung der Bedienkonsole vorgesehen werden muss, sondern ebenfalls noch eine Verschraubung vorgenommen werden kann.

In vorteilhafter Ausführungsform ist mindestens eine Öffnung des Abdeckelements durch eine Blindabdeckung verschlossen.

Dadurch kann auf einfache Art und Weise eine Anpassung erfolgen, wenn in einer bestimmten Ausführungsform der Bedienvorrichtung ein bestimmtes Bedienelement nicht erforderlich ist und weggelassen werden soll, ohne dass dadurch die Konstruktion eines eigenen Abdeckelements erforderlich ist.

Durch das Abdeckelement können abhängig von einer Breite der Bedienkonsole und den gewünschten Abständen der Bedienelemente untereinander verschiedene Varianten der Bedienvorrichtung mit mehreren Bedienelementen verwirklicht werden. Vorteilhaft sind die Position der Bedienelemente und der Abstand untereinander allein durch Änderungen an dem Abdeckelement zu verwirklichen. Das Abdeckelement sorgt auch dafür, dass der Zwischenraum zwischen den Bedienelementen abgedeckt ist. Es kann insgesamt eine Vormontagebaugruppe gebildet werden, die als Ganzes in die Bedienkonsole eingesetzt und montiert werden kann: Dabei können die Rastverbindungen zwischen dem Abdeckelement und den Bedienelementen so ausgeführt sein, dass sich diese nach dem Einsetzen nicht mehr lösen lassen wie etwa Rastnasen, die einrasten und nach dem Einrasten nicht mehr gelöst werden können, da die Haltebügel geometrisch blockiert sind, so dass sie nicht von den Rastnasen abgezogen werden können.

Auch wird die Variabilität für zukünftige Entwicklungen durch die erfindungsgemäße Bedienvorrichtung größer, da bei Änderungen der Bedienvorrichtung oftmals eine Anpassung des Abdeckelements ausreichend ist und standardisierte Bedienelemente zum Einsatz kommen können.

In günstiger Ausführungsform ist die Bedienkonsole eine Armlehne und die Bedienelemente sind nebeneinander, quer zu einer Längsrichtung der Armlehne angeordnet.

Vorteilhaft ist das Abdeckelement im Bereich eines Armlehnenkopfs angeordnet, insbesondere erstreckt es sich quer über die Armlehne.

Dadurch kann günstig erreicht werden, dass durch alleinige Bewegung des Handgelenks oder maximal des Unterarms bei auf der Armlehne aufliegendem Arm die einzelnen Bedienelemente der Bedienvorrichtung erreicht und bedient werden können.

Die Aufgabe wird auch durch ein System aus einer Mehrzahl von Bedienvorrichtungen, wie sie zuvor beschrieben wurden, für unterschiedliche Flurförderzeuge mit jeweils angepassten Bedienelementen und/oder unterschiedlichen Abdeckelementen gelöst.

Durch das erfindungsgemäße System, bei dem die zuvor beschriebenen Bedienvorrichtungen zum Einsatz kommen, kann auf einfache und kostengünstige Art und Weise eine modulare Bedienvorrichtung für unterschiedliche Flurförderzeuge oder dasselbe Flurförderzeug im Fall von unterschiedlichen Bedienkonzepten mit jeweils an die Situation angepassten Bedienelementen und/oder angepassten Abdeckelementen umgesetzt und verwirklicht werden. Die Anpassungen beschränken sich dabei lediglich auf die Entwicklung eines jeweils spezifisch vorgesehenen Abdeckelements, in dessen Öffnungen dann die jeweils erforderlichen Bedienelemente eingesetzt werden, oder nur auf die Auswahl angepasster Bedienelemente.

Eine vorteilhafte Ausführung der erfindungsgemäßen Bedienvorrichtung wird anhand der nachfolgenden Zeichnungen erläutert, in denen
- Fig. 1: ein Flurförderzeug mit einer erfindungsgemäßen Bedienvorrichtung,
- Fig. 2: die erfindungsgemäße Bedienvorrichtung eingesetzt in einen Armlehnenkopf,
- Fig. 3: ein Abdeckelement und ein einzelnes Bedienelement in Position zum Einsetzen,
- Fig. 4: eine erfindungsgemäße Bedienvorrichtung in Position über dem Armlehnenkopf zum Einsetzen und
- Fig. 5: ein Detail eines Bedienelements mit Abdeckelement, eingesetzt in den Armlehnenkopf, im Querschnitt zeigt.

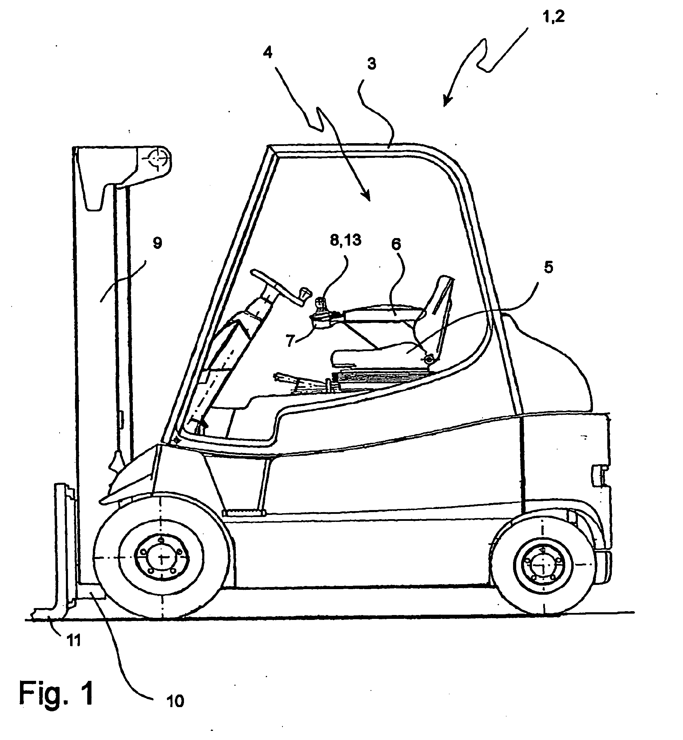

Die Fig. 1 zeigt ein als Gegengewichtsstapler 1 ausgebildetes Flurförderzeug 2 als Beispiel eines gattungsgemäßen Flurförderzeugs 2, bei dem eine erfindungsgemäße Bedienvorrichtung zum Einsatz kommt. Innerhalb eines Fahrerschutzdaches 3 ist ein Arbeitsplatz 4 für einen Fahrer angeordnet. Der Arbeitsplatz 4 umfasst einen Fahrersitz 5 mit einer am Fahrersitz 5 angeordneten, als Armlehne ausgebildeten Bedienkonsole 6. An der Bedienkonsole 6 sind im vorderen Bereich, dem Armlehnenkopf 7, mehrere Bedienelemente 8 vorgesehen, hier beispielsweise als Joysticks 13 ausgebildet. Mit Hilfe der Bedienelemente 8 ist die Arbeitshydraulik des Gabelstaplers 2 betätigbar, die einen Hubantrieb zum Anheben und Absenken eines an einem Hubmast 9 angeordneten als Hubschlitten ausgebildeten Lastaufnahmemittels 10, einen Neigeantrieb zum Neigen des Hubmasts 9 und einen oder mehrere Zusatzverbraucher umfasst, beispielsweise einen Seitenschieber, mittels dem eine an dem Lastaufnahmemittel 10 angeordnete Lastgabel 11 in seitlicher Richtung verstellbar ist.

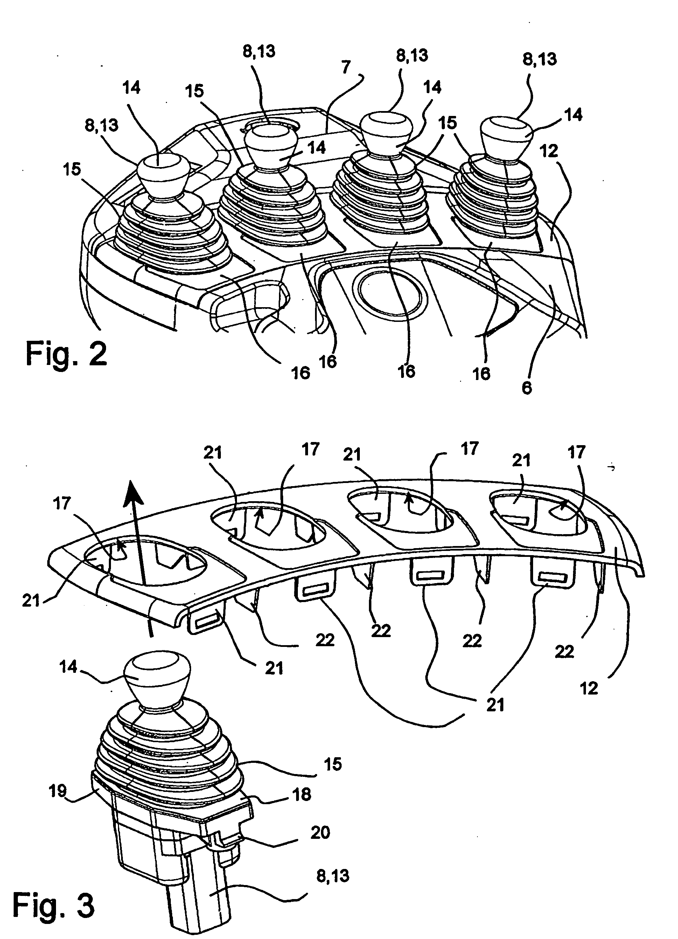

Die Fig. 2 zeigt den Armlehnenkopf 7 der zum Großteil nicht dargestellten Bedienkonsole 6. Im Wesentlichen bogenförmig und leicht nach oben gewölbt in Querrichtung zu einer Längserstreckung der Bedienkonsole 6 ist ein Abdeckelement 12 angeordnet. In dem Abdeckelement 12 sind insgesamt vier Bedienelemente 8 angeordnet, die jeweils als Joysticks 13 aufgebaut sind mit einem Handgriff 14 und deren Mechanik und Sensoren durch einen Faltenbalg 15 jeweils vor Verschmutzungen und Feuchtigkeit geschützt ist. In Richtung zu dem Fahrer hin orientiert ist vor jedem Bedienelement 8 auf dem Abdeckelement 12 angeordnet ein Flächenbereich 16, in dem ein Beschriftungsaufkleber angebracht werden kann, um die Funktionalität des Bedienelements 8 jeweils anzuzeigen.

Die Fig. 3 zeigt das Abdeckelement 12 der erfindungsgemäßen Bedienvorrichtung zusammen mit einem einzelnen Bedienelement 8 in der Position, im Sinne einer Explosionsdarstellung dargestellt, in der das Bedienelement 8 in das Abdeckelement 12 eingesetzt wird. Dabei ist durch den Pfeil die Einsetzrichtung verdeutlicht. Das Bedienelement 8 in Form eines Joysticks 13 weist den Handgriff 14 und den Faltenbalg 15 auf. Wenn der Joystick in das Abdeckelement 12 von unten eingesetzt wird, so muss dabei lediglich darauf geachtet werden, dass der sich im Wesentlichen kegelartig verjüngende Faltenbalg 15 vollständig durch eine dem Bedienelement 13 zugeordnete Öffnung 17 hindurchgelangt. Lediglich ein unterer Haltebereich 18 des Faltenbalgs 15 verbleibt auf der Unterseite des Abdeckelements 12, wenn das Bedienelement 13 vollständig von unten in die Öffnung 17 eingeführt ist. An einer Grundplatte 19 des Bedienelements 13 ist eine Rastnase 20 ausgeformt, die beim Einführen in die Öffnung 17 des Abdeckelements 12 in einen Haltebügel 21 auf der dem Fahrer zugewandten Seite des Abdeckelements 12 einrastet. Rastnase 20 und Haltebügel 21 bilden zusammen eine Rastverbindung 20, 21. Ein zweiter Haltebügel 21 ist auf der dem Fahrer abgewandten Seite angeordnet und wirkt mit einer in der Fig. 3 nicht dargestellten weiteren Rastnase zusammen und bildet eine weitere Rastverbindung 21. Dadurch wird das Bedienelement 13, sobald es in die Öffnung 17 vollständig eingesetzt ist, von den Haltebügeln 21 gehalten und ist formschlüssig mit dem Abdeckelement 12 verbunden. Zwischen den Öffnungen 17 sowie seitlich der Öffnungen 17 sind in Längsrichtung ausgerichtete Rippen 22 angeordnet, die das Abdeckelement 12 versteifen und beim Einsetzen des Bedienelements 8 einen Führungseffekt für das Bedienelement 8 bewirken, so dass dieses richtig ausgerichtet wird.

In die Öffnungen 17 können neben dem hier als Joystick 13 dargestellten Bedienelement 8 auch alternativ weitere Bedienelemente mit einer abweichenden Funktionalität eingesetzt werden, solange sie mit den entsprechenden Haltebügeln 21 durch Rastnasen verbunden werden können. Dabei können auch in Anpassung an die Art der Bedienelemente die bei dem hier vorliegenden Beispiel gleich ausgeführten Abstände zwischen den Öffnungen 17 unterschiedliche Breiten aufweisen, um die nötigen Freiräume zur Bedienung der jeweiligen Bedienelemente vorzusehen. Ebenso ist es auch möglich, dass angepasst an die Art des Bedienelements die Öffnungen 17 unterschiedlich breit sind, um die ggf. schmalere Bauweise oder breitere Bauweise eines Bedienelements zu berücksichtigen. Ebenfalls können die Rastverbindungen an unterschiedliche Bedienelemente angepasst werden.

Dadurch können angepasst an verschiedene Arten von Flurförderzeugen und deren zu bedienende Vorrichtungen wie hydraulische Zusatzverbraucher, Seitenschubvorrichtungen, aber auch Hubvorrichtungen zum Heben/Senken von Lasten, Neigevorrichtungen für Lastaufnahmemittel die entsprechenden Bedienelemente 8 vorgesehen werden. Vorteilhaft kann bei einem solchen System eine Anpassung an ein spezifisches Flurförderzeug allein durch eine Umgestaltung und entsprechende Anpassung des Abdeckelements 12 erfolgen und die weiteren Bauelemente, wie insbesondere der Armlehnenkopf 7 können unverändert verbleiben. Dadurch kann eine entsprechende Kostenersparnis erreicht werden.

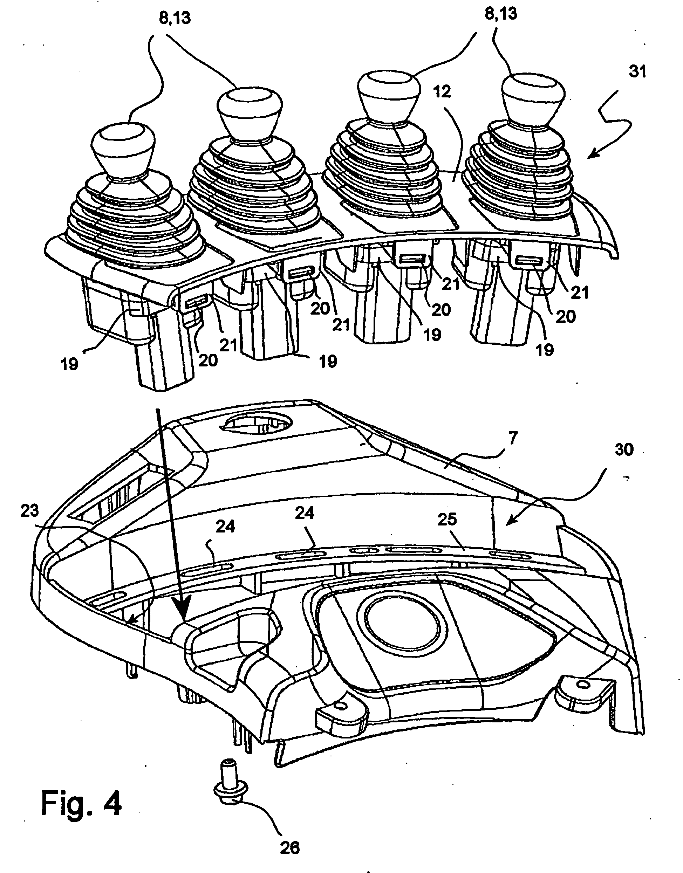

Die Fig. 4 zeigt eine erfindungsgemäße Bedienvorrichtung, bei der das Abdeckelement 12 mit vier gleichen, als Joystick 13 ausgeführten Bedienelementen 8 zu einer Vormontagebaugruppe 31 vormontiert in der Einsetzposition oberhalb des Armlehnenkopfs 7 dargestellt ist. Die Bedienelemente 8 sind dabei an dem Abdeckelement 12 jeweils durch die Rastnasen 20, die in die jeweiligen Haltebügel 21 eingerastet sind, befestigt und gehalten. Dadurch bildet das Abdeckelement 12 mit den Bedienelementen 8 die Vormontagebaugruppe 31, die wie durch den Pfeil angedeutet von oben in eine Öffnung 23 des Armlehnenkopfs 7 einsetzbar ist. Dabei sind an den jeweiligen Grundplatten 19 der Bedienelemente 8 hier nicht dargestellte Gewindeeinsätze vorhanden, die so angeordnet sind, dass sie über entsprechenden Langlöcher 24 eines Absatzes 25 in der Öffnung 23 des Armlehnenkopfs 7 zu liegen kommen. Die Öffnung 23 weist eine Seitenwand 30 auf. Wird das Abdeckelement 12 in die Öffnung 23 des Armlehnenkopfs 7 eingesetzt, so kann jeweils durch eine Schraube 26, die durch das Langloch 24 geführt wird und in das entsprechende Gewinde der Grundplatte 19 eines Bedienelements 8 eingesetzt wird, das Abdeckelement 12 über das Bedienelement 8 mit dem Armlehnenkopf 7 verbunden werden.

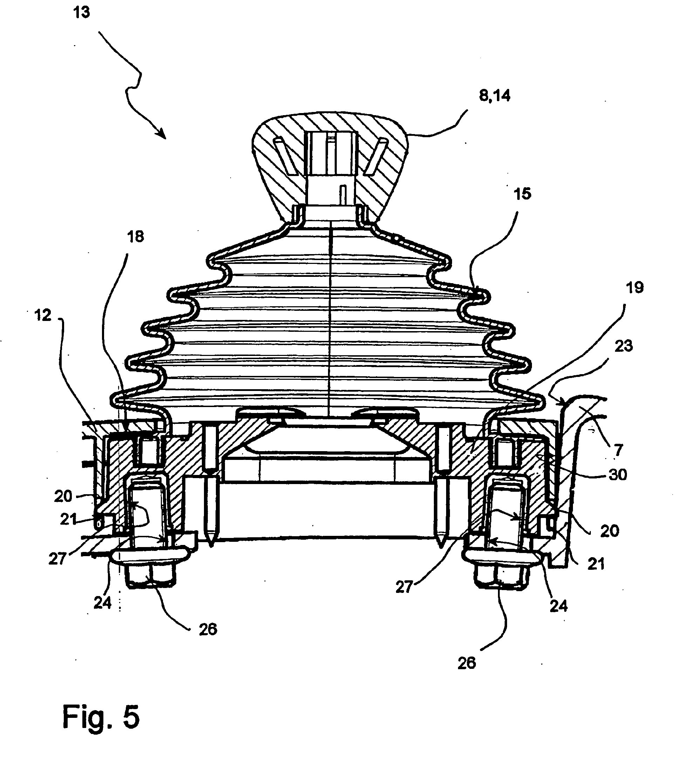

Die Fig. 5 zeigt im Schnitt den Joystick 13 als Bedienelement 8, der mit dem Abdeckelement 12 verbunden in dem Armlehnenkopf 7 eingesetzt ist. Von dem Joystick 13 ist hier in der Detaildarstellung im Schnitt nur der Handgriff 14, der Faltenbalg 15 sowie die Grundplatte 19 dargestellt. Die Mechanik mit den entsprechenden Sensoren ist in der Darstellung der Fig. 5 weggelassen. Der Faltenbalg 15 ist mit dem Haltebereich 18 zwischen dem Abdeckelement 12 und der Grundplatte 19 festgeklemmt. Die Grundplatte 19 ist von der durch die Rastnase 20 und dem Haltebügel 21 gebildeten Rastverbindung 20, 21 formschlüssig mit dem Abdeckelement 12 verbunden. Dabei verhindert die Seitenwand 30, dass der Haltebügel 21 soweit aufgebogen werden kann, dass dieser von der Rastnase 20 freikommen kann. Dadurch lässt sich die Rastverbindung bei eingebauter Vormontagebaugruppe 31 nicht lösen und ist gesichert. In ein Gewinde 27 ist die Schraube 26 eingesetzt, die durch das Langloch 24 hindurchgeführt ist und dadurch den Joystick 13 mit dem Abdeckelement 12 in der Öffnung 23 des Armlehnenkopfs 7 hält.

Vorteilhaft kann mit der erfindungsgemäßen Bedienvorrichtung bewirkt werden, dass unter minimalen Änderungen allein an dem Abdeckelement 12 und unter Verwendung von entsprechenden schmäleren oder breiteren bzw. auf einem anderen Funktionsprinzip basierenden Bedienelementen 8, oder einer unterschiedlichen Anzahl von Bedienelementen 8, oder unter Verwendung von unterschiedlichen Abdeckelementen 12, eine Anpassung an ein anderes Flurförderzeug und dessen Funktionen erfolgen kann. Durch den Einsatz von Langlöchern 24 kann dabei auch vermieden werden, dass Änderungen an dem Armlehnenkopf 7 vorgenommen werden müssen, da, selbst wenn die Position der einzelnen Bedienelemente 8 an dem Abdeckelement 12 in vormontierten Zustand abweichen sollte, die jeweilige Schraube 26 dennoch das Bedienelement 8 an dem Armlehnenkopf 7 befestigen kann und somit indirekt das Abdeckelement 12, auch wenn aufgrund von Änderungen der Position des Bedienelements das Gewinde 27 seitlich verschoben ist. Bei der eigentlichen Montage wird das Abdeckelement 12 mit den Bedienelementen 8 als Vormontagebaugruppe 31 in den Armlehnenkopf 7 eingesetzt. Sodann werden von der Unterseite her die Schrauben 26 mit den Gewinden 27 durch die Langlöcher 24 und dadurch das Abdeckelement 12 über die Bedienelemente 8 mit dem Armlehnenkopf 7 verbunden. Abschließend können noch in den Flächenbereichen 16 Beschriftungsaufkleber angebracht werden, die die Funktionalität der jeweiligen Bedienelemente 8 erläutern. Durch die Langlöcher 24 wird sichergestellt, dass unterschiedliche Abdeckelemente 12 in dem Armlehnenkopf 7 befestigbar sind.

## Patentansprüche

1. Bedienvorrichtung für ein Flurförderzeug mit mindestens einem an einer Armlehne als Bedienkonsole (6) angeordneten Bedienelement (8),
**dadurch gekennzeichnet,**
**dass** das Bedienelement (8) in einer Öffnung (17) eines Abdeckelements (12) befestigt ist und in diesem Abdeckelement (12) montiert als Vormontagebaugruppe (31) in eine Aufnahmeöffnung (23) der Bedienkonsole (6) einsetzbar ist.

2. Bedienvorrichtung nach Anspruch 1,
**dadurch gekennzeichnet,**
**dass** das Bedienelement (8) an dem Abdeckelement (12) in die Öffnung (17) von der Unterseite her einsetzbar ist.

3. Bedienvorrichtung nach Anspruch 2,
**dadurch gekennzeichnet,**
**dass** das Bedienelement (8) einen Faltenbalg (15) aufweist, dessen unteres Ende zwischen dem Bedienelement (8) und dem Abdeckelement (12) gehalten ist.

4. Bedienvorrichtung nach einem der Ansprüche 1 bis 3,
**dadurch gekennzeichnet,**
**dass** das Bedienelement (8) durch mindestens eine Rastverbindung (20,21) mit dem Abdeckelement (12) verbunden ist.

5. Bedienvorrichtung nach Anspruch 4,
**dadurch gekennzeichnet,**
**dass** die Rastverbindung (20,21) von einer Rastnase (20) und einem Haltebügel (21) gebildet ist.

6. Bedienvorrichtung nach Anspruch 5,
**dadurch gekennzeichnet,**
**dass** die Rastnase (20) an dem Bedienelement (8) angeordnet ist.

7. Bedienvorrichtung nach Anspruch 6,
**dadurch gekennzeichnet,**
**dass** das Abdeckelement (12) im Bereich der Öffnung (17) einen Haltebügel (21) für die Rastnase (20) aufweist.

8. Bedienvorrichtung nach einem der Ansprüche 4 bis 7,
**dadurch gekennzeichnet,**
**dass** das Bedienelement (8) durch mindestens zwei an der Öffnung einander gegenüber liegende Rastverbindung (20,21) mit dem Abdeckelement (12) verbunden ist.

9. Bedienvorrichtung nach einem der Ansprüche 4 bis 8,
**dadurch gekennzeichnet,**
**dass** die Aufnahmeöffnung mit einer Seitenwand (30) versehen ist, die bei in die Aufnahmeöffnung (23) eingesetzter Vormontagebaugruppe (31) mit der Rastverbindung (20,21) in Wirkverbindung steht.

10. Bedienvorrichtung nach einem der Ansprüche 1 bis 9,
**dadurch gekennzeichnet,**
**dass** das Abdeckelement (12) Flächenbereiche (16) für Beschriftungsaufkleber aufweist.

11. Bedienvorrichtung nach einem der Ansprüche 1 bis 10,
**dadurch gekennzeichnet,**
**dass** das Abdeckelement (12) zwischen den Öffnungen (17) an der Unterseite Rippen (22) aufweist.

12. Bedienvorrichtung nach einem der Ansprüche 1 bis 11,
**dadurch gekennzeichnet,**
**dass** zumindest eines der Bedienelemente (8) ein um eine oder zwei Achsen verschwenkbarer Bedienhebel, insbesondere Joystick (13), ist.

13. Bedienvorrichtung nach einem der Ansprüche 1 bis 12,
**dadurch gekennzeichnet,**
**dass** zumindest eines der Bedienelemente ein Drehgeber oder Drehrücksteller ist.

14. Bedienvorrichtung nach einem der Ansprüche 1 bis 13,
**dadurch gekennzeichnet,**
**dass** das Abdeckelement (12) über das Bedienelement (8) an der Bedienkonsole (6) befestigt ist, insbesondere über Schraubverbindungen zwischen dem Bedienelement (8) und der Bedienkonsole (6).

15. Bedienvorrichtung nach Anspruch 14,
**dadurch gekennzeichnet,**
**dass** das Bedienelement (8) Gewindeeinsätze aufweist und die Bedienkonsole (6) mit Langlöchern (24) versehen ist.

16. Bedienvorrichtung nach Anspruch 15,
**dadurch gekennzeichnet,**
**dass** mehrere Bedienelemente in Öffnungen (17) eines gemeinsamen Abdeckelements (12) mit mehreren Öffnungen befestigt sind und als Vormontagebaugruppe (31) in die Bedienkonsole (6) einsetzbar sind.

17. Bedienvorrichtung nach Anspruch 16,
**dadurch gekennzeichnet,**
**dass** mindestens eine Öffnung des Abdeckelements durch eine Blindabdeckung verschlossen ist.

18. Bedienvorrichtung nach einem der Ansprüche 1 bis 17,
**dadurch gekennzeichnet,**
**dass** die Bedienkonsole (6) eine Armlehne ist und die Bedienelemente nebeneinander, quer zu einer Längsrichtung der Armlehne (6) angeordnet sind,

19. Bedienvorrichtung nach Anspruch 18,
**dadurch gekennzeichnet,**
**dass** das Abdeckelement (12) im Bereich eines Armlehnenkopfes (7) angeordnet ist.

20. System aus einer Mehrzahl von Bedienvorrichtungen nach einem der Ansprüche 1 bis 19 für unterschiedliche Flurförderzeuge mit jeweils angepassten Bedienelementen (8) und/oder mit jeweils angepassten Abdeckelementen.

## Claims

1. Control device for an industrial truck with at least one control element (8) arranged on an armrest as control console (6), **characterized in that** the control element (8) is fixed in an opening (17) in a cover element (12) and, in this cover element (12), fitted as a preinstalled assembly (31), can be inserted into a receiving opening (23) in the control console (6).

2. Control device according to Claim 1, **characterized in that** the control element (8) on the cover element (12) can be inserted into the opening (17) from the lower side.

3. Control device according to Claim 2, **characterized in that** the control element (8) has a bellows (15), whose lower end is held between the control element (8) and the cover element (12).

4. Control device according to one of Claims 1 to 3, **characterized in that** the control element (8) is connected to the cover element (12) by at least one latching connection (20, 21).

5. Control device according to Claim 4, **characterized in that** the latching connection (20, 21) is formed by a latching tab (20) and a retaining clip (21).

6. Control device according to Claim 5, **characterized in that** the latching tab (20) is arranged on the control element (8).

7. Control device according to Claim 6, **characterized in that** the cover element (12) has a retaining clip (21) for the latching tab (20) in the region of the opening (17).

8. Control device according to one of Claims 4 to 7, **characterized in that** the control element (8) is connected to the cover element (12) by at least two latching connections (20, 21) which are opposite one another at the opening.

9. Control device according to one of Claims 4 to 8, **characterized in that** the receiving opening is provided with a side wall (30), which is operatively connected to the latching connection (20, 21) when the preinstalled assembly (31) is inserted into the receiving opening (23).

10. Control device according to one of Claims 1 to 9, **characterized in that** the cover element (12) has surface regions (16) for identification labels.

11. Control device according to one of Claims 1 to 10, **characterized in that** the cover element (12) has ribs (22) on the lower side between the openings (17).

12. Control device according to one of Claims 1 to 11, **characterized in that** at least one of the control elements (8) is a control lever which can be pivoted about one or two axes, in particular a joystick (13).

13. Control device according to one of Claims 1 to 12, **characterized in that** at least one of the control elements is a rotary position transducer or a rotary reset device.

14. Control device according to one of Claims 1 to 13, **characterized in that** the cover element (12) is fixed to the control console (6) via the control element (8), in particular via screw connections between the control element (8) and the control console (6).

15. Control device according to Claim 14, **characterized in that** the control element (8) has threaded inserts, and the control console (6) is provided with slots (24).

16. Control device according to Claim 15, **characterized in that** a plurality of control elements are fixed in openings (17) in a common cover element (12) with a plurality of openings and can be inserted, as a preinstalled assembly (31), into the control console (6).

17. Control device according to Claim 16, **characterized in that** at least one opening in the cover element is closed by a blanking cover.

18. Control device according to one of Claims 1 to 17, **characterized in that** the control console (6) is an armrest and the control elements are arranged next to one another, transversely to a longitudinal direction of the armrest (6).

19. Control device according to Claim 18, **characterized in that** the cover element (12) is arranged in the region of an armrest head (7).

20. System comprising a plurality of control devices according to one of Claims 1 to 19 for different industrial trucks with respectively matched control elements (8) and/or with respectively matched cover elements.

## Revendications

1. Dispositif de commande pour un chariot de manutention, comprenant au moins un élément de commande (8) disposé sur un accoudoir faisant office de panneau de commande (6),
**caractérisé en ce que**
l'élément de commande (8) est fixé dans une ouverture (17) d'un élément de recouvrement (12) et, monté dans cet élément de recouvrement (12), peut être inséré en tant que module de prémontage (31) dans une ouverture de réception (23) du panneau de commande (6).

2. Dispositif de commande selon la revendication 1,
**caractérisé en ce que**
l'élément de commande (8) sur l'élément de recouvrement (12) peut être inséré depuis le côté inférieur dans l'ouverture (17).

3. Dispositif de commande selon la revendication 2,
**caractérisé en ce que**
l'élément de commande (8) comprend un soufflet (15) dont l'extrémité inférieure est maintenue entre l'élément de commande (8) et l'élément de recouvrement (12).

4. Dispositif de commande selon l'une quelconque des revendications 1 à 3,
**caractérisé en ce que**
l'élément de commande (8) est relié au moyen d'au moins une liaison par encliquetage (20, 21) à l'élément de recouvrement (12).

5. Dispositif de commande selon la revendication 4,
**caractérisé en ce que**
la liaison par encliquetage (20, 21) est formée d'un ergot d'encliquetage (20) et d'un étrier de retenue (21).

6. Dispositif de commande selon la revendication 5,
**caractérisé en ce que**
l'ergot d'encliquetage (20) est disposé sur l'élément de commande (8).

7. Dispositif de commande selon la revendication 6,
**caractérisé en ce que**
l'élément de recouvrement (12) comprend un étrier de retenue (21) pour l'ergot d'encliquetage (20) dans la région de l'ouverture (17).

8. Dispositif de commande selon l'une quelconque des revendications 4 à 7,
**caractérisé en ce que**
l'élément de commande (8) est relié à l'élément de recouvrement (12) au moyen d'au moins deux liaisons par encliquetage (20, 21) opposées l'une à l'autre au niveau de l'ouverture.

9. Dispositif de commande selon l'une quelconque des revendications 4 à 8,
**caractérisé en ce que**
l'ouverture de réception est pourvue d'une paroi latérale (30) qui est en liaison fonctionnelle avec la liaison par encliquetage (20, 21) lorsque le module de prémontage (31) est inséré dans l'ouverture de réception (23).

10. Dispositif de commande selon l'une quelconque des revendications 1 à 9,
**caractérisé en ce que**
l'élément de recouvrement (12) comprend des régions de surface (16) pour des étiquettes adhésives portant des inscriptions.

11. Dispositif de commande selon l'une quelconque des revendications 1 à 10,
**caractérisé en ce que**
l'élément de recouvrement (12) comprend des nervures (22) sur le côté inférieur entre les ouvertures (17).

12. Dispositif de commande selon l'une quelconque des revendications 1 à 11,
**caractérisé en ce**
**qu'**au moins l'un des éléments de commande (8) est un levier de commande pivotant autour d'un ou deux axes, en particulier un joystick (13).

13. Dispositif de commande selon l'une quelconque des revendications 1 à 12,
**caractérisé en ce**
**qu'**au moins l'un des éléments de commande est un capteur de rotation ou un dispositif de rappel rotatif.

14. Dispositif de commande selon l'une quelconque des revendications 1 à 13,
**caractérisé en ce que**
l'élément de recouvrement (12) est fixé au panneau de commande (6) par l'intermédiaire de l'élément de commande (8), en particulier au moyen de liaisons vissées entre l'élément de commande (8) et le panneau de commande (6).

15. Dispositif de commande selon la revendication 14,
**caractérisé en ce que**
l'élément de commande (8) comprend des inserts filetés et le panneau de commande (6) est pourvu de trous oblongs (24).

16. Dispositif de commande selon la revendication 15,
**caractérisé en ce que**
plusieurs éléments de commande sont fixés dans des ouvertures (17) d'un élément de recouvrement (12) commun doté de plusieurs ouvertures et peuvent être insérés dans le panneau de commande (6) en tant que module de prémontage (31).

17. Dispositif de commande selon la revendication 16,
**caractérisé en ce**
**qu'**au moins une ouverture de l'élément de recouvrement est fermée par un recouvrement borgne.

18. Dispositif de commande selon l'une quelconque des revendications 1 à 17,
**caractérisé en ce que**
le panneau de commande (6) est un accoudoir et les éléments de commande sont disposés les uns à côté des autres, transversalement à une direction longitudinale de l'accoudoir (6).

19. Dispositif de commande selon la revendication 18,
**caractérisé en ce que**
l'élément de recouvrement (12) est disposé dans la région d'une tête d'accoudoir (7).

20. Système constitué d'une pluralité de dispositifs de commande selon l'une quelconque des revendications 1 à 19 pour différents chariots de manutention comprenant des éléments de commande (8) adaptés respectifs et/ou des éléments de recouvrement adaptés respectifs.
